# EUROPEAN PATENT SPECIFICATION

(11) **EP 2 071 897 B1**
(45) Date of publication and mention of the grant of the patent: **28.08.2013**
(21) Application number: 08021411.7
(22) Date of filing: 10.12.2008
(51) Int. Cl.: H04W 4/12, H04W 76/02, H04M 7/00, H04M 3/533

(54) **Message storing method and message storing system**
Nachrichtenspeicherverfahren und Nachrichtenspeichersystem
Procédé de stockage de messages et système pour le stockage de messages

(30) Priority: 14.12.2007 JP 2007323210
(43) Date of publication of application: 17.06.2009
(73) Proprietor: NTT DOCOMO, INC., Chiyoda-ku Tokyo 100-6150 (JP)
(72) Inventor: Hokamura, Aya, Tokyo 100-6150 (JP); Yabusaki, Masami, Tokyo 100-6150 (JP); Tamura, Motoshi, Tokyo 100-6150 (JP)
(74) Representative: Henseler, Daniela

(56) References cited:
- WO-A1-2005/120030
- WO-A1-2005/120031
- US-A1- 2003 169 865
- "3rd Generation Partnership Project; Technical Specification Group Services and Architecture; Feasibility Study on Multimedia Session Continuity; Stage 2 (Release 8)", 3GPP STANDARD; 3GPP TR 23.893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 1 December 2007 (2007-12-01), pages 1-52, XP050364165,

## Description

The present invention relates to a message storing method according to the preamble of claim 1 and a message storing system according to the preamble of claim 3.

When a terminal makes a voice/television call to another terminal, there are some cases where the receiving-side terminal cannot answer the call, because the receiving-side terminal is out of the range of service. Under such circumstances, when the receiver subscribes to the telephone answering service, the mobile switching center transfers the call to a message storage device that stores messages. Then, the calling-side terminal transmits the message that has been input by the caller to the message storage device and the message storage device stores the message, so that the receiver can play the message of the telephone answering service stored in the message storage device at any time.

In recent years, there have been a wide variety of communication lines and message types. For this reason, in storing a message, reading out, conversion of the message format is often necessary.

As an example, in a system described in JP 11163922, in order to unify the management of multimedia messages, a message from a subscriber is received via a circuit-switched network and is then packetized. Such a packetized message is converted into a storage format to store the message. Alternatively, a packetized message received via a packet-switched network is converted into a storage format.

In addition, in a multimedia storage and conversion service system described in JP 2002044123 , in reading out the message, the stored data is converted and transferred according to the media selection of the receiving destination, so that the data required by the receiver can be received by a terminal required by the receiver at a time required by the receiver.

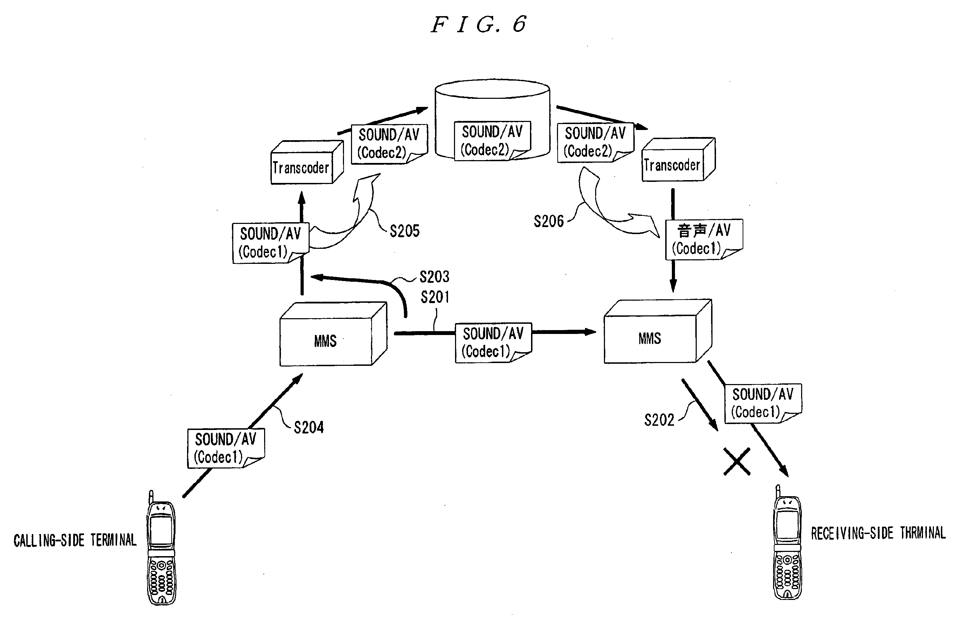

Furthermore, in both storing and playing the above-described message of the telephone answering service, "Codec conversion" is performed on the message. Referring now to Fig. 6, the conventional procedure of storing and playing a message of a telephone answering service will be described in detail. Firstly, the calling-side terminal makes a voice/television call over a communication line of a circuit-switched network (Step S201). If the receiving-side terminal cannot answer the call (Step S202), a multimedia switching center (MMS) transfers the incoming call over the communication line of a circuit-switched network (Step S203). The calling-side terminal converts the message of the telephone answering service that has been input by the caller into Codec (hereinafter, simply referred to as "Codec 1") so that the message can be transmitted over the communication line of the circuit-switched network. Specifically, an example is that the sound portion of the message is compressed to sound data for 8 kbps, and the image portion thereof is compressed to image data for 64 kbps. Then, the calling-side terminal transmits the converted message to the message storage device via a communication line of the circuit-switched network where the communication is guaranteed (Step S204). On the other hand, the message storage device is designed to store messages for Codec for the packet-switched network (hereinafter, simply referred to as "Codec 2"). The message of Codec 1 that has been transferred from the calling-side terminal is converted into the message of Codec 2 by a converter (Step S205), and is then stored in the message storage device.

Furthermore, in playing the message, the message of Codec 2 stored in the message storage device is converted into the message of Codec 1 for a circuit-switched network by the converter, and is then transmitted to the receiving-side terminal (Step S205).

Herein, Codec conversion denotes a conversion of codes of sound data or image data according to a compression/expansion algorithm. The types of Codec include Moving Picture Experts Group (MPEG) 2, MPEG 4, and the like.

As described heretofore, when the calling-side terminal makes a call via a communication line of the circuit-switched network, the communication line of the circuit-switched network is connected between the calling-side terminal and the message storage device. Therefore, the calling-side terminal has to transmit the message of the telephone answering service in Codec corresponding to the communication line of the circuit-switched network. This causes the problem that Codec type and the line quality occurring at the time of transferring are passed on as the quality of the circuit-switched network at the time of transmission, whereby a low-quality message of the telephone answering service is transmitted.

In addition, Codec conversion is performed at the time of storing the message and at the time of reading out the message. This degrades the message quality of the telephone answering service.

Furthermore, in transmitting the message of the telephone answering service to the message storage device, real-time communication securing two-way communication with the receiving-side terminal is not always performed. One-way communication from the calling-side terminal to the message storage device is performed. Nevertheless, since the real-time transmission quality securing the excessive two-way communication is guaranteed, wasteful network facilities are prepared.

WO 2005/120030 A1 and WO 2005/120031 A1 relate to an apparatus, a system and a method that provide a voicemail service using a packet data messaging service such as multimedia message service.

According to US 2003/169865 A1 a method, an apparatus and a system are disclosed that complete a call when a called party has not answered the call from a calling party.

The present invention has been made in view of the above circumstances and provides a message storing method according to claim 1 and a message storing system according to claim 3 thereby allowing a high-quality message to be stored in an efficient manner, even when a message is transmitted via a communication line of a circuit-switched network.

The present application describes a mobile communication terminal capable of storing a message for a receiving-side terminal in a storage device, the mobile communication terminal comprising: means for making a call to the receiving-side terminal via a communication line of a circuit-switched network; means for switching the communication line from the circuit-switched network to a packet-switched network, when receiving a switching request from a network system in response to the call from the means for making the call; and means for transmitting to the storage device the message to be stored in the storage device, via the communication line of the packet-switched network that has been switched by the means for switching.

In the above configuration, the mobile communication terminal switches the communication line of the circuit-switched network to that of the packet-switched network, so that the message to be stored in the storage device is transmitted to the storage device via the communication line of the packet-switched network. Therefore, even when the message is transmitted via the communication line of the circuit-switched network, the message of Codec of high quality is allowed to be transmitted and stored in the storage device. Furthermore, there is no need for guaranteeing the real-time transmission quality securing two-way communication of the circuit-switched network, thereby enabling the message to be transmitted in an efficient manner.

Further, there is provided a mobile switching center capable of controlling communication between a calling-side terminal and a receiving-side terminal and storing in a storage device a message transmitted from the calling-side terminal to the receiving-side terminal, the mobile switching center comprising: means for discriminating whether or not the receiving-side terminal is capable of answering a call made by the calling-side terminal via a communication line of a circuit-switched network; means for switching the communication line with the calling-side terminal from the circuit-switched network to a packet-switched network, when the means for discriminating discriminates that the receiving-side terminal is not capable of answering the call; means for connecting the communication line of the packet-switched network with the storage device; and means for transmitting the message that has been transmitted from the calling-side terminal via the communication line of the packet-switched network that has been switched by the means for switching, to the storage device via the communication line of the packet switched network that has been connected by the means for connecting.

In the above configuration, when the mobile switching center discriminates that the receiving-side terminal is not capable of answering the call, the communication line with the calling-side terminal is switched from the circuit-switched network to the packet-switched network. The message, which has been transmitted via the communication line of the packet-switched network, after the communication line is switched, is transmitted to the storage device via the communication line of the packet-switched network. Therefore, even when the calling-side terminal transmits the message via the communication line of the circuit-switched network, the message of Codec of high quality is allowed to be transmitted and stored in the storage device. This eliminates the necessity of guaranteeing the real-time transmission quality securing two-way communication, thereby transmitting the message in an efficient manner.

In the above mobile switching center, wherein the means for switching may include: means for transmitting to the calling-side terminal a switching request for switching the communication line with the calling-side terminal from the circuit-switched network to the packet-switched network; means for managing the communication line with the calling-side terminal, when an establishment request for the communication line of the packet-switched network is received from the calling-side terminal, by associating the establishment request that has been received and the communication line of the circuit-switched network that is established with the calling-side terminal; and means for disconnecting the communication line of the circuit-switched network, when the establishment of the communication line of the packet-switched network is completed.

In the above configuration, the mobile switching center associates the establishment request of the communication line of the packet-switched network with the communication line of the circuit-switched network that is established with the calling-side terminal, so as to manage the communication line with the calling-side terminal. When the communication line with the calling-side terminal is established, the communication line of the circuit-switched network is disconnected. It is therefore possible to switch the communication line smoothly without letting the caller realizing the switching.

Further, there is provided a storage device comprising: means for receiving a message from a calling-side terminal to a receiving-side terminal via a communication line of a packet-switched network; and means for storing the message that has been received by the means for receiving without performing a Codec conversion.

With such a configuration, the storage device stores the message that has been received without a codec conversion, thereby enabling the message to be stored in an efficient manner.

Further, the storage device according to the above storage device, further comprises: means for notifying the receiving-side terminal that the message for the receiving-side terminal is stored; means for discriminating an optimal Codec to deliver the message for the receiving-side terminal, when receiving a message acquiring request from the receiving-side terminal; means for converting a Codec of the message based upon a discrimination result of the means for discriminating; and means for delivering to the receiving-side terminal the message that has been converted by the means for converting.

In the above configuration, upon receipt of the message acquiring request from the receiving-side terminal, the storage device discriminates the optimal Codec for delivering the message to the receiving-side terminal, converts Codec of the message based on the discrimination result, and then delivers the message. Therefore, at the time of storing the message, the message is not converted with keeping Codec high quality, and codec conversion is performed only at the time of delivering the message, thereby enabling the message playing of high quality.

In the above storage device, wherein the means for discriminating may discriminate the optimal Codec based upon at least one of the type of the communication line with the receiving-side terminal and capabilities of the receiving-side terminal.

In the above configuration, the message is transmitted after performing Codec conversion optimal to the type of the communication line with the receiving-side terminal and the capabilities of the receiving-side terminal. This allows the receiving-side terminal to play the message at the most suitable quality.

There is provided a method for storing a message from a calling-side terminal to a receiving-side terminal, the method comprising: making a call from the calling-side terminal to the receiving-side terminal via a communication line of a circuit-switched network; a network system switching the communication line with the calling-side terminal from the circuit-switched network to a packet-switched network, when a network system discriminates that the receiving-side terminal is not capable of answering the call; transmitting the message from the calling-side terminal to the receiving-side terminal to be stored, to the network system via the communication line of the packet-switched network that has been switched by the switching; and the network system storing the message that has been transmitted by the transmitting in a storage device without performing a Codec conversion.

In the above method, when the network system discriminates that the receiving-side terminal is not capable of answering the transmission from the calling-side terminal via the communication line of the circuit-switched network, the communication line with the calling-side terminal is switched to the packet-switched network from the circuit-switched network. The calling-side terminal transmits the message to the receiving-side terminal via the communication line of the packet-switched network, and the network system stores the message in the storage device without performing a Codec conversion. Therefore, even when the calling-side terminal transmits the message via the communication line of the circuit-switched network, the message of a high-quality Codec is allowed to be transmitted and stored. Furthermore, there is no need for guaranteeing the real-time transmission quality securing two-way communication by means of the circuit-switched network, thereby enabling the message to be transmitted in an efficient manner.

The above method may further comprises: the network system notifying the receiving-side terminal that the message for the receiving-side terminal is stored; transmitting a message acquiring request to the network system from the receiving-side terminal; the network system discriminating an optimal Codec to deliver the message for the receiving-side terminal, when the message acquiring request from the receiving-side terminal is received; the network system converting Codec of the message based upon a result of the discriminating; and the network system delivering to the receiving-side terminal the message that has been converted by the converting.

In the above method, when the network device receives the message acquiring request from the receiving-side terminal, the network device discriminates the optimal Codec for delivering the message for the receiving-side terminal, performs a Codec conversion of the message based upon the discrimination result, and delivers the message to the receiving-side terminal. At the time of storing the message, the message is stored with keeping the high-quality Codec and without performing a Codec conversion. Codec conversion is performed only at the time of delivering the message, thereby enabling playing the message of high quality.

When the network system discriminates that the receiving-side terminal is not capable of answering the call from the calling-side terminal via the communication line of the circuit-switched network, the communication line with the calling-side terminal is switched from the circuit-switched network to the packet-switched network. The calling-side terminal transmits the message to the receiving-side terminal via the communication line of the packet-switched network, and then the network system stores the message in the storage device without performing a Codec conversion. Therefore, even when the message is transmitted via the communication line of the circuit-switched network, the message of a high-quality Codec is enabled to be transmitted and stored. Furthermore, there is no need for guaranteeing the real-time transmission quality securing two-way communication, thereby allowing the transmission of the message in an efficient manner.

Additionally, when receiving the message acquiring request from the receiving-side terminal, the network system discriminates the optimal Codec for delivering the message for the receiving-side terminal, converts Codec of the message based upon the discrimination result, and delivers the message to the receiving-side terminal. The message of high quality is stored without performing a Codec conversion at the time of storing the message and the message is converted to correspond to the optimal Codec only at the time of message delivery, thereby allowing playing of the message of high quality.

Further objects, advantages and embodiments may be taken from the following description.
FIG. 1 illustrates the overall configuration of a communication network according to one aspect of the present invention;
FIG. 2 illustrates functional block diagrams of a calling-side terminal, a receiving-side terminal, a mobile switching center, and the message storage device, included in the communication network according to one aspect of the present invention;
FIG. 3 illustrates a sequence diagram showing the flow of message storage processing in the communication network according to one aspect of the present invention;
FIG. 4 illustrates a sequence diagram showing the flow of message playing processing in the communication network according to one aspect of the present invention;
FIG. 5 illustrates an operation example in a communication network according to one aspect of the present invention; and
FIG. 6 illustrates one example of the conventional procedure of storing and playing processing of a message.

The embodiments of the present invention will now be described with reference to the accompanied drawings. In the drawings, the same components and configurations have the same reference numerals and a detailed explanation will be omitted, if not otherwise specified.

### OVERALL CONFIGURATION

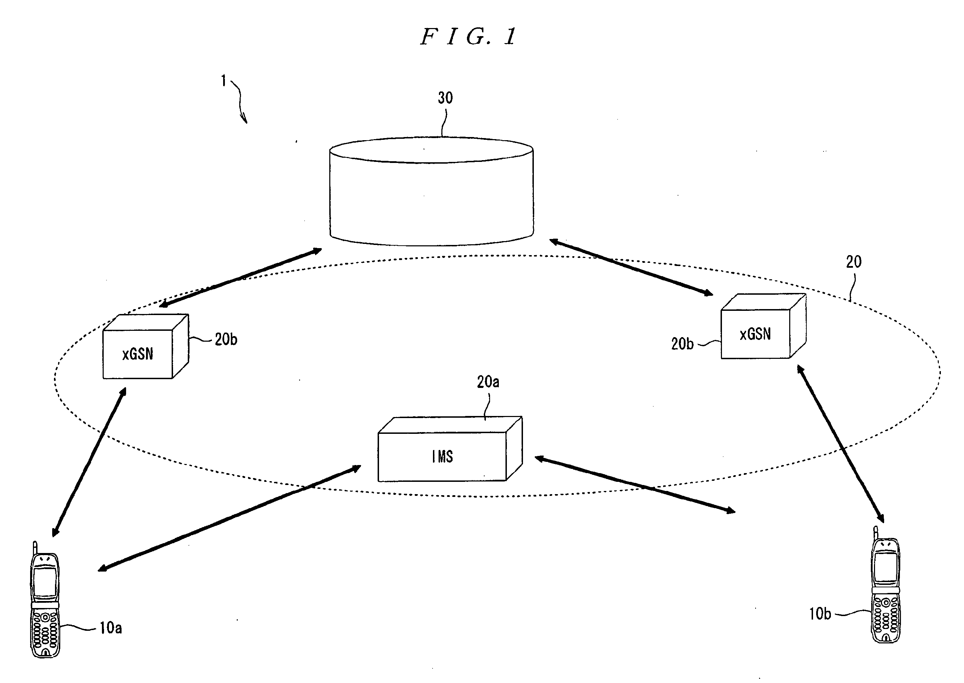

FIG. 1 illustrates the overall configuration of a communication network according to one aspect of the present invention. Referring to FIG. 1, the communication network includes: a network system 1; a calling-side terminal 10a; and a receiving-side terminal 10b. The calling-side terminal 10a and the receiving-side terminal 10b are mobile communication terminals on which a moving image pickup function is mounted. The network system 1 includes: a mobile switching center 20 having an IP Multimedia Subsystem (IMS) 20a and a serving/gateway GPRS Support Node (xGSN) 20b; and a message storage device 30 that stores a message from a caller to a receiver. Each of the above system components is equipped with a Central Processing Unit (CPU), a memory that stores software, and a communication interface.

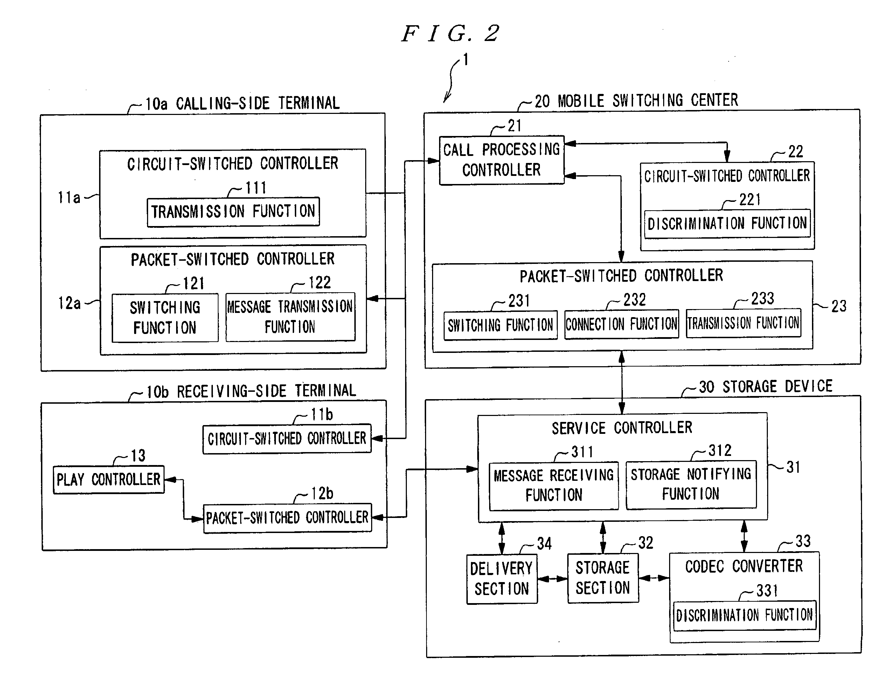

FIG. 2 illustrates functional block diagrams of the calling-side terminal 10a, the receiving-side terminal 10b, a mobile switching center 20, and the message storage device 30, included in the communication network.

### FUNCTIONAL CONFIGURATION OF CALLING-SIDE TERMINAL

The calling-side terminal 10a includes: a circuit-switched controller 11 a that controls communication over a circuit-switched network; and a packet-switched controller 12a that controls communication over a packet-switched network.

The circuit-switched controller 11 a includes a calling function 111 for making a call to the receiving-side terminal 10b via a communication line of the circuit-switched network.

The packet-switched controller 12a include: a switching function 121 for switching the communication line from the circuit-switched network to the packet-switched network, when a switching request issued from the network system 1 is received in response to the call from the calling-side terminal 10a; and a message transmission function 122 for transmitting a message to be stored in the message storage device 30 via the communication line of the packet-switched network after the communication line is switched.

Herein, the communication over the circuit-switched network means that a physical communication line (session) is established (connected) between a data sending-side and a data receiving-side to perform the communication by occupying the communication line. In the communication over the circuit-switched network, a high-rate backbone line is divided into multiple low-rate channels in accordance with the bandwidth or transmission rate, so that each transmission is achieved on each channel. Therefore, the circuit-switched network is not suitable for transmitting data with a large volume and of high quality. Data is compressed and then transmitted.

The communication over the packet-switched network means that data with destination addresses and sequences are sequentially transmitted as packets over a broadband and high-rate communication network, without dividing the network into channels. Therefore, it is possible to transmit the data with a large volume and of high quality. For example, packet streaming over a wireless high-rate network is enabled.

### FUNCTIONAL CONFIGURATION OF RECEIVING SIDE TERMINAL

The receiving-side terminal 10b includes: a circuit-switched controller 11 b that controls communication over a circuit-switched network; a packet-switched controller 12b that controls communication over a packet-switched network; and a play controller 13 that plays the message that has been delivered from the message storage device 30. Herein, the message includes at least one of a sound message and an image message.

### FUNCTIONAL CONFIGURATION OF MOBILE SWITCHING CENTER

The mobile switching center 20 include: a call processing controller 21 that manages various types of information relating to call processing for controlling calls; a circuit-switched controller 22 that controls the establishment and disconnection of a communication line of a circuit-switched network; and a packet-switched controller 23 that controls the establishment and disconnection of a communication line of a packet-switched network. The mobile switching center 20 also manages positional information and capabilities of mobile communication terminals that exist in the range of service.

The circuit-switched controller 22 includes a discrimination function 221 for discriminating whether or not the receiving-side terminal 10b can respond to the call made by the calling-side terminal 10a via the communication line of the circuit-switched network. For instance, when the receiving-side terminal 10b has not answered the call for a certain period of time since the receiving-side terminal 10b started calling, or when the position of the receiving-side terminal 10b is not registered because the power of the receiving-side terminal 10b is off or the receiving-side terminal 10b is out of the range of service, the discrimination function 221 discriminates that the receiving-side terminal 10b cannot answer the call.

The packet-switched controller 23 include: a switching function 231 for switching the communication line between the calling-side terminal 10a and the receiving-side terminal 10b from the circuit-switched network to the packet-switched network, when it is discriminated that the receiving-side terminal 10b cannot answer the call; a connection function 232 for connecting the message storage device 30 and the communication line of the packet-switched network, when the message is stored in the message storage device 30; and a transmission function 233 for transmitting to the message storage device 30 the message that has been transmitted from the calling-side terminal 10a via the communication line of the packet-switched network after the communication line is switched, via the communication line of the packet-switched network.

In addition, the switching function 231 includes: a switching request transmission function; a line management function; and a disconnection function. The switching request transmission function transmits to the calling-side terminal 10a a switching request for switching from the communication line with the calling-side terminal 10a form the circuit-switched network to the packet-switched network. The line management function manages the communication line with the calling-side terminal 10a by storing in a memory, for example, a first identifier of an establishment request that has been received in association with a second identifier of the communication line of the circuit-switched network that is established with the calling-side terminal 10a, when the establishment request of the communication line of the packet-switched network is received from the calling-side terminal 10a. The disconnection function disconnects the communication line of the circuit-switched network, when the establishment of the communication line of the packet-switched network is completed.

### FUNCTIONAL CONFIGURATION OF MESSAGE STORAGE DEVICE

The message storage device 30 includes: a service controller 31 that controls transmission and reception of a message to be stored; a storage section 32 that stores the message in a memory device such as a database; a codec converter 33 that perform a Codec conversion of the message; and a delivery section 34 that delivers the stored message.

The service controller 31 includes: a message receiving function 311 for receiving a message from the calling-side terminal 10a to the receiving-side terminal 10b via the communication line of the packet-switched network; and a storage notifying function 312 for notifying the receiving-side terminal 10b that the message is stored.

The storage section 32 is a storage device corresponding to Codec for the packet-switched network, and stores the message of Codec for the packet-switched network that has been received via the communication line of the packet-switched network, without performing a Codec conversion of the message.

The codec converter 33 includes a discrimination function 331 for discriminating the optimal Codec to deliver to the receiving-side terminal 10b the stored message that has been requested to acquire, when a stored message acquiring request is received from the receiving-side terminal 10b. The codec converter 33 converts Codec of the stored message to be delivered based upon the discrimination result made by the discrimination function 331.

The delivery section 34 delivers the message that has been converted by the codec converter 33 to the receiving-side terminal 10b.

### OPERATION

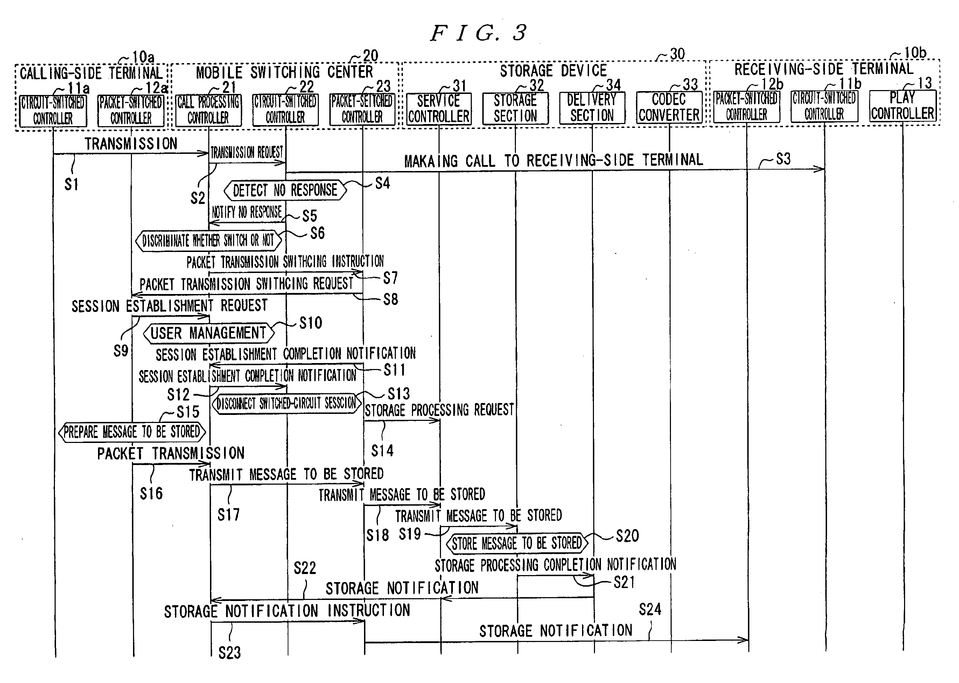

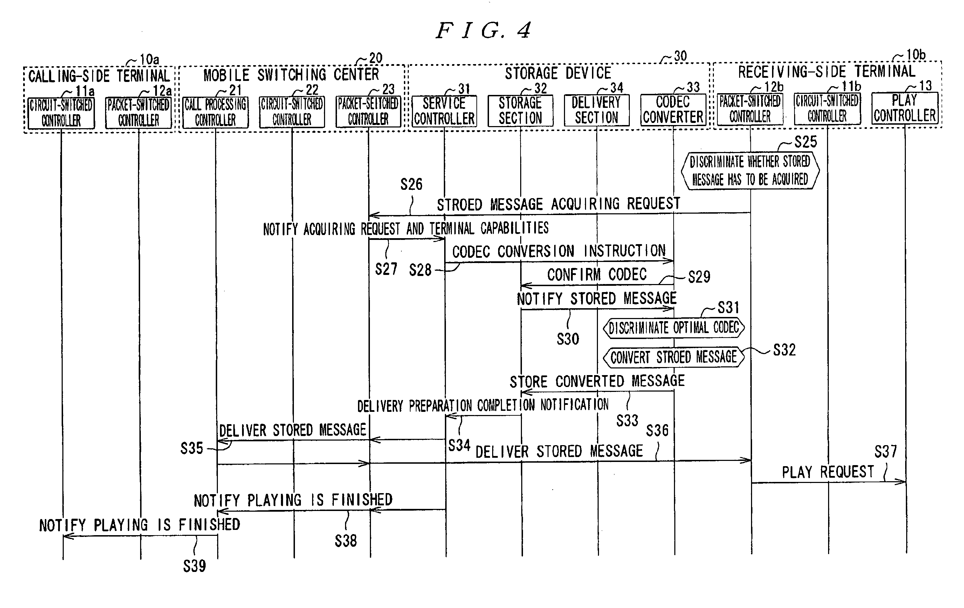

Referring now to sequence diagrams of FIG. 3 and FIG. 4, operational flows of message storage processing and message playing processing in a communication network according to one aspect of the present invention will be described.

Firstly, a caller manipulates the calling-side terminal 10a to give an instruction of making a call to the receiving-side terminal 10b. This causes the circuit-switched controller 11 a of the calling-side terminal 10a to make a call or page to the receiving-side terminal 10b via the communication line of the circuit-switched network (Step S1).

The call processing controller 21 of the mobile switching center 20, upon receipt of the incoming call from the calling-side terminal 10a, transmits a calling request to the circuit-switched controller 22 (Step S2). The circuit-switched controller 22, upon receipt of the calling request, makes a call to the receiving-side terminal 10b (Step S3). At this time, the circuit-switched controller 22 detects that the receiving-side terminal 10b has not answered the call for a certain period of time (Step S4), and then notifies the call processing controller 21 that the receiving-side terminal 10b has not answered (Step S5). The call processing controller 21 discriminates whether the communication line with the calling-side terminal 10a can be switched to the packet-switched network, by discriminating whetherthe calling-side terminal 10a is a communication terminal that is capable of transmitting packets or receiving a packet transmission switching request (Step S6). When it is discriminated that the line can be switched, the call processing controller 21 gives a packet transmission switching instruction to the packet-switched controller 23 (Step S7). The packet-switched controller 23 transmits the packet transmission switching request to the calling-side terminal 10a (Step S8).

The packet-switched controller 12a of the calling-side terminal 1 0a, upon receipt of the packet transmission switching request from the mobile switching center 20, transmits a session establishment request to the mobile switching center 20 (Step S9).

The call processing controller 21 of the mobile switching center 20, upon receipt of the session establishment request from the calling-side terminal 10a, manages the communication line with the calling-side terminal 10a in association with an ID of the session establishment request that has been received, and a session ID of the communication line of the circuit-switched network that has been established with the calling-side terminal 10a (Step S10).

The call processing controller 21, upon receipt of a session establishment completion notification from the packet-switched controller 23 (Step S11), transfers the session establishment completion notification of the packet-switched network to the circuit-switched controller 22 (Step S12). The circuit-switched controller 22, upon receipt of the session establishment completion notification, disconnects the circuit-switched session (Step S13).

Next, the packet-switched controller 23 connects the communication line of the packet-switched network with the message storage device 30, by transmitting a storage processing request to the message storage device 30 (Step S14).

The packet-switched controller 12a of the calling-side terminal 10a prepares a sound or voice that has been made by a caller or an image that has been taken by a camera mounted on the calling-side terminal 10a, as a message to be stored (Step S15), and then transmits the message to be stored via the communication line of the packet-switched network (Step S16).

The call processing controller 21 of the mobile switching center 20, upon receipt of the message to be stored from the calling-side terminal 10a, transfers the message to be stored to the packet-switched controller 23 (Step S17). The packet-switched controller 23 transmits the message to be stored to the codec converter 33 (Step S18).

The service controller 31 of the message storage device 30, upon receipt of the message to be stored from the mobile switching center 20, transfers the message to be stored to the storage section 32 (Step S19). The storage section 32 stores the message that has been received in a database without performing a Codec conversion (Step S20). Subsequently, the storage section 32 transmits a storage processing completion notification to the delivery section 34 (Step S21). The delivery section 34 that has received the storage processing completion notification transmits a storage notification to the mobile switching center 20 (Step S22).

The call processing controller 21 of the mobile switching center 20, upon receipt of the storage notification from the message storage device 30, gives a storage notification instruction to the packet-switched controller 23 (Step S23). This causes the packet-switched controller 23 to notify the receiving-side terminal 10b that the message for a receiver is stored (Step S24).

The packet-switched controller 12b of the receiving-side terminal 10b, upon receipt of the storage notification from the mobile switching center 20, discriminates whether the stored message has to be acquired (Step S25 of FIG. 4). For instance, when the receiver manipulates the receiving-side terminal 10b to give a message acquiring instruction, the packet-switched controller 12b discriminates that the stored message has to be acquired, and then transmits the stored message acquiring request to the mobile switching center 20 (Step S26). In this configuration, it is assumed that the receiver has given the stored message acquiring request via the communication line of the packet-switched network.

The packet-switched controller 23 of the mobile switching center 20, upon receipt of the stored message acquiring request from the receiving-side terminal 10b, transmits to the message storage device 30 the stored message acquiring request together with information about terminal capabilities of the receiving-side terminal 10b (Step S27).

The service controller 31 of the message storage device 30, upon receipt of the acquiring request and terminal capabilities from the mobile switching center 20, gives a Codec conversion instruction including the above information to the codec converter 33 (Step S28). The codec converter 33 confirms with the storage section 32 the type of Codec relating to the stored message that has been requested to acquire (Step S29). The storage section 32 transmits the stored message that has been requested to the codec converter 33 (Step S30). The codec converter 33 discriminates the optimal Codec to deliver the stored message to the receiving-side terminal 10b, based upon the capabilities the receiving-side terminal 10b and the type of the communication line over which the stored message is transmitted (Step S31). For instance, in a case where the type of the communication line corresponds to the packet communication, if the receiving-side terminal 10b has insufficient terminal capabilities and is not capable of playing the message with Codec for the packet communication, the stored message needs to be converted to correspond to Codec of low quality.

Based upon the above-described discrimination result, the codec converter 33 performs a Codec conversion of the stored message (Step S32). The codec converter 33 stores the message, Codec of which has been converted in the storage section 32 (Step S33). The storage section 32 transmits a delivery preparation completion notification to the service controller 31 (Step S34). The service controller 31 delivers the stored message to the mobile switching center 20 (Step S35).

The call processing controller 21 of the mobile switching center 20 delivers the stored message that has been received from the message storage device 30, to the receiving-side terminal 10b (Step S36). The packet-switched controller 12b of the receiving-side terminal 10b, upon receipt of the stored message, transmits a play request to the play controller 13 (Step S37). This causes the play controller 13 to play the stored message.

After playing of the message is completed, the service controller 31 of the message storage device 30 transmits a play completion notification to the mobile switching center 20 (Step S38). The call processing controller 21 of the mobile switching center 20, upon receipt of the play completion notification, transfers the play completion notification to the calling-side terminal 10a (Step S39). This makes the caller learn that the message playing has been completed.

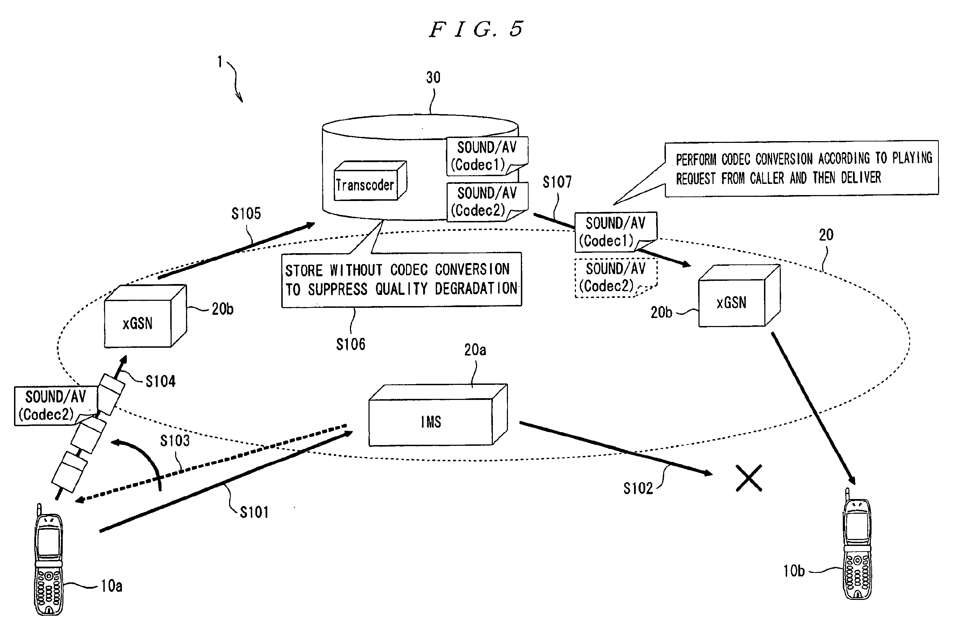

FIG. 5 illustrates an operation example in a communication network according to one aspect of the present invention. When the calling-side terminal 10a makes a call to the receiving-side terminal 10b (Step S101) over a circuit-switched network but the call doesn't arrive at the receiving-side terminal 10b (Step S102), the IMS 20a issues a packet transmission switching request (Step S103). Then, the calling-side terminal 10a switches the communication line to a packet-switched network and transmits the message of Codec 2 corresponding to the communication line of the packet-switched network (Step S104). The xGSN 20b transfers the message of Codec 2 to the message storage device 30 (Step S105). The message storage device 30 stores the message of Codec 2 without performing a Codec conversion (Step S106). This enables storing of the message without degrading the quality thereof.

In delivering the message, the message storage device 30 converts the message to correspond to Codec 1 for the communication line of the circuit-switched network, based upon a play request instruction issued from the receiver or the terminal capabilities of the receiving-side terminal 10b. Alternatively, the message storage device 30 delivers the message to the receiving-side terminal 10b with keeping Codec 2 (Step S107).

As described above, the calling-side terminal 10a switches the communication line from the circuit-switched network to the packet-switched network at the time of storing a message, and then transmits the message to the message storage device 30 via the communication line of the packet-switched network after the communication line is switched. The message storage device 30 stores the message that has been received without performing a Codec conversion. Thus, this enables transmitting and storing of the message with Codec of high quality. This also eliminates the need for guaranteeing the real-time transmission quality securing two-way communication by means of the circuit-switched network. Specifically, there is no necessity of guaranteeing excessive transmission quality, thereby eliminating wasteful network facilities and transmitting the message in an efficient manner.

In addition, the mobile switching center 20 manages the establishment request of the communication line of the packet-switched network in association with the communication line of the circuit-switched network that has already been established with the calling-side terminal 10a. The mobile switching center 20 disconnects the communication line of the circuit-switched network when the communication line with the calling-side terminal 10a is established. This enables switching of the communication line smoothly without making the caller realize the switching.

Since the communication line is switched from the circuit-switched network that employs time-connection charge to the packet-switched network that employs data volume charge, the caller is able to use the message storing service within a flat-rate fee, if the caller signs up for the packet flat-rate service.

Furthermore, when receiving a message acquiring request from the receiving-side terminal 10b, the message storage device 30 discriminates the optimal Codec for delivering the message for the receiving-side terminal 10b, converts Codec of the message depending upon the discrimination result, and delivers the message to the receiving-side terminal 10b. The message is stored in a high-quality state without performing a Codec conversion, whereas the message is converted to correspond to the optimal Codec at the time of delivery. This enables message playing according to the optimal Codec satisfying the request of the caller or the terminal capabilities.

Furthermore, the receiver is able to select the communication link at the time of message playing. When the receiver sins up for the packet flat-rate service and selects the packet-switched network, the receiver is able to use the message playing service within a flat-rate fee.

At the time of message delivery, an optimal Quality of Service (QoS) may be selected so as to deliver the message.

In the above embodiments, the description has been given of a case where the communication line is switched from the circuit-switched network to the packet-switched network. However, the present invention is not limited to this. The communication line may be switched to a wireless LAN, WiMAX, or the like. In addition, the optimal Codec for storage may be discriminated, the message may be converted to correspond to the optimal Codec, and then the message may be stored.

## Claims

1. A method for storing a message from a calling-side terminal (1 0a) to a receiving-side terminal (10b), the method comprising:
making a call, by the calling-side terminal (10a), to the receiving-side terminal (10b) via a communication line of a circuit-switched network (S1);
transmitting, by a mobile switching center (20), to the calling-side terminal (1 0a) a packet transmission switching request for switching the circuit-switched network to a packet-switched network (S8), when the mobile switching center (20) detects that the receiving-side terminal (1 0b) does not answer the call for a certain period of time since the calling-side terminal (10a) starts making a call to the receiving-side terminal (10b) via the communication line of the circuit-switched network (S4), and when the mobile switching center (20) discriminates that the receiving-side terminal (1 0b) is not capable of answering the call (S5), and discriminates whether the communication line with the calling-side terminal (10a) can be switched to the packet-switched network, by discriminating whether the calling-side terminal (10a) is a communication terminal capable of transmitting packets or receiving the packet transmission switching request (S6);
transmitting, by the calling-side terminal (10a) having received the packet transmission switching request, a session establishment request for establishing a session to a mobile switching center (20) (S9);
switching, by the mobile switching center (20), the communication line of the circuit-switched network to the communication line of the packet-switched network from the calling-side terminal (10a) to the mobile switching center (20) (S13, S14);
preparing, by the calling-side terminal (10a), a message for the receiving-side terminal (10b), upon receipt of the packet transmission switching request for switching the communication line of the circuit-switched network to the communication line of the packet-switched network (S15);
transmitting, by the calling-side terminal (10a), the message for the receiving-side terminal (10b), to the mobile switching center (20) via the communication line of the packet-switched network that has been switched by the switching (S16);
transmitting, by the mobile switching center (20), to a storage device (30) the message for the receiving-side terminal (10b) via the communication line of the packet-switched network that has been switched by the switching (S18);
storing, by the mobile switching center (20), in the storage device (30) the message that has been transmitted via the communication line of the packet-switched network without performing a Codec conversion for a storage format, upon receipt of the message (S18);
notifying, by the storage device (30), the receiving-side terminal (10b) that the message for the receiving-side terminal (10b) is stored (S24); and
performing the Codec conversion by the storage device (30) (S32), when a stored message acquiring request for acquiring the stored message is received from the receiving-side terminal (10b) (S26), and when the Codec conversion is discriminated to be necessary based upon a capability of the receiving-side terminal (10b) and a type of the communication line over which the stored message is transmitted from the storage device (30) to the receiving-side terminal (10b) (S31).

2. The method according to claim 1, further comprising:
transmitting, by the receiving-side terminal (10b) to the storage device (30) the message acquiring request for acquiring the stored message; and
delivering, by the storage device (30), to the receiving-side terminal (10b) the message on which the Codec conversion has been performed.

3. A system for storing a message from a calling-side terminal (10a) to a receiving-side terminal (10b), the calling-side terminal (10a) being operable to make a call to the receiving-side terminal (10b) via a communication line of a circuit-switched network (S1);
the system comprising:
a mobile switching center (20) operable to transmit a packet transmission switching request for switching the circuit-switched network to a packet-switched network (S8), when the mobile switching center (20) detects that the receiving-side terminal (10b) does not answer the call for a certain period of time since the calling-side terminal (10a) starts making a call to the receiving-side terminal (10b) via the communication line of the circuit-switched network (S4) and when the mobile switching center (20) discriminates that the receiving side terminal (10b) is not capable of answering the call (S5) and discriminates whether the communication line with the calling-side terminal (10a) can be switched to the packet-switched network, by discriminating whether the calling-side terminal (10a) is a communication terminal capable of transmitting packets or receiving the packet transmission switching request (S6); and
a storage device (30) operable to store a message from the calling-side terminal (10a) to the receiving-side terminal (10b),
wherein:
the calling-side terminal (10a) that has received the packet transmission switching request is operable to transmit a session establishment request for establishing a session to the mobile switching center (20) (S9),
the mobile switching center (20) is operable to switche the communication line of the circuit-switched network to the communication line of the packet-switched network from the calling-side terminal (10a) to the mobile switching center (20) (S13, S14),
the calling-side terminal (10a) is operable to prepare the message for the receiving-side terminal (10b), upon receipt of the packet transmission switching request for switching the communication line of the circuit-switched network to the communication line of the packet-switched network (S15),
the calling-side terminal (10a) is operable to transmit the message for the receiving-side terminal (10b) to the mobile switching center (20) via the communication line of the packet-switched network that has been switched by the switching (S16),
the mobile switching center (20) is operable to transmit to the storage device (30) the message for the receiving-side terminal (10b) via the communication line of the packet-switched network that has been switched by the switching (S18);
the mobile switching center (20) is operable to store in the storage device (30) the message that has been transmitted via the communication line of the packet-switched network without performing a Codec conversion for a storage format, upon receipt of the message (S18);
the storage device (30) is operable to notifie the receiving-side terminal (10b) that the message for the receiving-side terminal (10b) is stored (S24); and
the storage device (30) (S32) is operable to perform the Codec conversion, when a stored message acquiring request for acquiring the stored message is received from the receiving-side terminal (10b) (S26), and when the Codec conversion is discriminated to be necessary based upon a capability of the receiving-side terminal (10b) and a type of the communication line over which the stored message is transmitted from the storage device (30) to the receiving-side terminal (10b) (S31).

## Patentansprüche

1. Verfahren zum Speichern einer Meldung von einem Endgerät (10a) der rufenden Seite zu einem Endgerät (10b) der empfangenden Seite, wobei das Verfahren umfasst:
Anrufen durch das Endgerät (10a) der rufenden Seite des Endgeräts (10b) der empfangenden Seite über eine Kommunikationsleitung eines leitungsvermittelten Netzes (S1);
Senden einer Paketübertragungsvermittlungsanforderung zum Vermitteln des leitungsvermittelten Netzes zu einem paketvermittelten Netz durch eine Mobilfunkvermittlungsstelle (20) zu dem Endgerät (10a) der rufenden Seite (S8), wenn die Mobilfunkvermittlungsstelle (20) detektiert, dass das Endgerät (10b) der empfangenden Seite den Anruf für eine bestimmte Zeitdauer nicht annimmt, seit das Endgerät (10a) der rufenden Seite begonnen hat, das Endgerät (10b) der empfangenden Seite über die Verbindungsleitung des leitungsvermittelten Netzes anzurufen (S4), und wenn die Mobilvermittlungsstelle (20) unterscheidet, dass das Endgerät (10b) der empfangenden Seite den Anruf nicht annehmen kann (S5), und unterscheidet, ob die Verbindungsleitung mit dem Endgerät (10a) der rufenden Seite zu dem paketvermittelten Netz vermittelt werden kann, durch Unterscheiden, ob das Endgerät (10a) der rufenden Seite ein Kommunikationsendgerät ist, das Pakete senden oder die Paketübertragungsvermittlungsanforderung empfangen kann (S6);
Senden einer Sitzungsaufbauanforderung zum Aufbauen einer Sitzung zu einer Mobilfunkvermittlungsstelle (20) durch das Endgerät (10a) der rufenden Seite, das die Paketübertragungsvermittlungsanforderung empfangen hat (S9);
Vermitteln der Kommunikationsleitung des leitungsvermittelten Netzes zu der Kommunikationsleitung des paketvermittelten Netzes von dem Endgerät (10a) der rufenden Seite zu der Mobilfunkvermittlungsstelle (20) durch die Mobilfunkvermittlungsstelle (20) (S13, S14);
Vorbereiten einer Meldung für das Endgerät (10b) der empfangenden Seite durch das Endgerät (10a) der rufenden Seite nach dem Empfang der Paketübertragungsvermittlungsanforderung zum Vermitteln der Kommunikationsleitung des leitungsvermittelten Netzes zu der Kommunikationsleitung des paketvermittelten Netzes (S15);
Senden der Meldung für das Endgerät (10b) der empfangenden Seite durch das Endgerät (10a) der rufenden Seite zu der Mobilfunkvermittlungsstelle (20) über die Kommunikationsleitung des paketvermittelten Netzes, die durch das Vermitteln vermittelt wurde (S16);
Senden der Meldung für das Endgerät (10b) der empfangenden Seite durch die Mobilfunkvermittlungsstelle (20) zu einer Speichervorrichtung (30) über die Kommunikationsleitung des paketvermittelten Netzes, die durch das Vermitteln vermittelt wurde (S18);
Speichern der Meldung, die über die Kommunikationsleitung des paketvermittelten Netzes gesendet wurde, durch die Mobilfunkvermittlungsstelle (20) in der Speichervorrichtung (30) nach dem Empfang der Meldung ohne Ausführen einer Codec-Umsetzung für ein Speicherformat (S18);
Benachrichtigen des Endgeräts (10b) der empfangenden Seite durch die Speichervorrichtung (30), dass die Meldung für das Endgerät (10b) der empfangenden Seite gespeichert ist (S24); und
Ausführen der Codec-Umsetzung durch die Speichervorrichtung (30) (S32), wenn eine Abholungsanforderung für die gespeicherte Meldung zum Abholen der gespeicherten Meldung von dem Endgerät (10b) der empfangenden Seite empfangen wird (S26) und wenn basierend auf einer Fähigkeit des Endgeräts (10b) der empfangenden Seite und einem Typ von Kommunikationsleitung, über die die gespeicherte Meldung von der Speichervorrichtung (30) zu dem Endgerät (10b) der empfangenden Seite gesendet wird, unterschieden wird, dass die Codec-Umsetzung notwendig ist (S31).

2. Verfahren nach Anspruch 1, das ferner umfasst:
Senden der Abholungsanforderung für die Meldung zum Abholen der gespeicherten Meldung durch das Endgerät (10b) der empfangenden Seite zu der Speichervorrichtung (30); und
Zustellen der Meldung zu dem Endgerät (10b) der empfangenden Seite durch die Speichervorrichtung (30), auf der die Codec-Umsetzung ausgeführt wurde.

3. System zum Speichern einer Meldung von einem Endgerät (10a) der rufenden Seite zu einem Endgerät (10b) der empfangenden Seite, wobei das Endgerät (10a) der rufenden Seite so arbeitet, dass das Endgerät (10b) der empfangenden Seite über eine Kommunikationsleitung eines leitungsvermittelten Netzes anruft (S1);
wobei das System umfasst:
eine Mobilfunkvermittlungsstelle (20), die so arbeitet, dass sie eine Paketübertragungsvermittlungsanforderung zum Vermitteln des leitungsvermittelten Netzes zu einem paketvermittelten Netz sendet (S8), wenn die Mobilfunkvermittlungsstelle (20) detektiert, dass das Endgerät (10b) der empfangenden Seite einen Anruf für eine bestimmte Zeitdauer, nachdem das Endgerät (10a) der rufenden Seite begonnen hat, das Endgerät (10b) der empfangenden Seite über die Kommunikationsleitung des leitungsvermittelten Netzes anzurufen, nicht annimmt (S4), und wenn die Mobilfunkvermittlungsstelle (20) unterscheidet, dass das Endgerät (10b) der empfangenden Seite den Anruf nicht annehmen kann (S5), und unterscheidet, ob die Verbindungsleitung mit dem Endgerät (10a) der rufenden Seite zu dem paketvermittelten Netz vermittelt werden kann, durch Unterscheiden, ob das Endgerät (10a) der rufenden Seite ein Kommunikationsendgerät ist, das Pakete senden oder die Paketübertragungsvermittlungsanforderung empfangen kann (S6); und
eine Speichervorrichtung (30), die so arbeitet, dass sie eine Meldung von dem Endgerät (10a) der rufenden Seite zu dem Endgerät (10b) der empfangenden Seite speichern kann,
wobei:
das Endgerät (10a) der rufenden Seite, das die Paketübertragungsvermittlungsanforderung empfangen hat, arbeitet, um eine Sitzungsaufbauanforderung zum Aufbauen einer Sitzung zu der Mobilfunkvermittlungsstelle (20) zu senden (S9),
die Mobilfunkvermittlungsstelle (20) arbeitet, um die Kommunikationsleitung des leitungsvermittelten Netzes zu der Kommunikationsleitung des paketvermittelten Netzes von dem Endgerät (10a) der rufenden Seite zu der Mobilfunkvermittlungsstelle (20) zu vermitteln (S13, S14),
das Endgerät (10a) der rufenden Seite arbeitet, um nach dem Empfang der Paketübertragungsvermittlungsanforderung zum Vermitteln der Kommunikationsleitung des leitungsvermittelten Netzes zu der Kommunikationsleitung des paketvermittelten Netzes die Meldung für das Endgerät (10b) der empfangenden Seite vorzubereiten (S15),
das Endgerät (10a) der rufenden Seite arbeitet, um die Meldung für das Endgerät (10b) der empfangenden Seite zu der Mobilfunkvermittlungsstelle (20) über die Kommunikationsleitung des paketvermittelten Netzes, das durch das Vermitteln vermittelt wurde, zu senden (S16),
die Mobilfunkvermittlungsstelle (20) arbeitet, die Meldung für das Endgerät (10b) der empfangenden Seite über die Kommunikationsleitung des paketvermittelten Netzes, die durch das Vermitteln vermittelt wurde zu einer Speichervorrichtung (30) zu senden (S18);
die Mobilfunkvermittlungsstelle (20) arbeitet, um die Meldung, die über die Kommunikationsleitung des paketvermittelten Netzes gesendet wurde, ohne Ausführen einer Codec-Umsetzung für ein Speicherformat in der Speichervorrichtung (30) nach dem Empfang der Meldung zu speichern (S18);
die Speichervorrichtung arbeitet, um das Endgerät (10b) der empfangenden Seite zu benachrichtigen, dass die Meldung für das Endgerät (10b) der empfangenden Seite gespeichert ist (S24); und
die Speichervorrichtung (30) arbeitet, um die Codec-Umsetzung auszuführen, wenn eine Abholungsanforderung für die gespeicherte Meldung zum Abholen der gespeicherten Meldung von dem Endgerät (10b) der empfangenden Seite empfangen wird (S26) und wenn basierend auf einer Fähigkeit des Endgeräts (10b) der empfangenden Seite und einem Typ von Kommunikationsleitung, über die die gespeicherte Meldung von der Speichervorrichtung (30) zu dem Endgerät (10b) der empfangenden Seite gesendet wird, unterschieden wird, dass die Codec-Umsetzung notwendig ist (S31).

## Revendications

1. Un procédé pour enregistrer un message depuis un terminal du côté appelant (10a) à un terminal du côté recevant (10b), le procédé comprenant les étapes de :
faire un appel, par le terminal du côté appelant (10a) au terminal du côté recevant (10b), par l'intermédiaire d'une ligne de communication d'un réseau à commutation de circuits (S1);
transmettre, par un centre de commutation mobile (20) au terminal du côté appelant (10a), une requête de commutation de transmission de paquets pour commuter le réseau à commutation de circuits à un réseau à commutation de paquets (S8), lorsque le centre de commutation mobile (20) détecte que le terminal du côté recevant (10b) ne répond pas à l'appel pendant une certaine période de temps depuis que le terminal du côté appelant (10a) commence à faire un appel au terminal du côté recevant (10b) par l'intermédiaire de la ligne de communication du réseau à commutation de circuits (S4), et lorsque le centre de commutation mobile (20) discrimine que le terminal du côté recevant (10b) n'est pas capable de répondre à l'appel (S5), et discrimine si la ligne de communication avec le terminal du côté appelant (10a) peut être commutée au réseau à commutation de paquets en discriminant si le terminal du côté appelant (10a) est un terminal de communication capable de transmettre des paquets ou recevoir la requête de commutation de transmission de paquets (S6);
transmettre, par le terminal du côté appelant (10a) ayant reçu la requête de commutation de transmission de paquets, une requête d'établissement de session pour établir une session au centre de commutation mobile (20) (S9);
commuter, par le centre de commutation mobile (20), la ligne de communication du réseau à commutation de circuits à la ligne de communication du réseau à commutation de paquets depuis le terminal du côté appelant (10a) au centre de commutation mobile (20) (S13, S14);
préparer, par le terminal du côté appelant (10a), un message pour le terminal du côté recevant (10b) dès la réception de la requête de commutation de transmission de paquets pour commuter la ligne de communication du réseau à commutation de circuits à la ligne de communication du réseau à commutation de paquets (S15);
transmettre, par le terminal du côté appelant (10a), le message pour le terminal du côté recevant (10b) au centre de commutation mobile (20) par l'intermédiaire de la ligne de communication du réseau à commutation de paquets, qui a été commutée par la commutation (S16);
transmettre, par le centre de commutation mobile (20) à un dispositif d'enregistrement (30), le message pour le terminal du côté recevant (10b) par l'intermédiaire de la ligne de communication du réseau à commutation de paquets, qui a été commutée par la commutation (S18);
enregistrer, par le centre de commutation mobile (20) dans le dispositif d'enregistrement (30), le message, qui a été transmis par l'intermédiaire de la ligne de communication du réseau à commutation de paquets sans effectuer une conversion Codec pour un format d'enregistrement, dès la réception du message (S18);
notifier, par le dispositif d'enregistrement (30) au terminal du côté recevant (10b), que le message pour le terminal du côté recevant (10b) est enregistré (S24); et
effectuer la conversion Codec par le dispositif d'enregistrement (30) (S32), lorsqu'une requête d'acquisition d'un message enregistré pour acquérir le message enregistré, est reçue depuis le terminal du côté recevant (10b) (S26), et lorsque la conversion Codec est discriminée pour être nécessairement basée sur une capacité du terminal du côté recevant (10b) et un type de ligne de communication, sur laquelle le message enregistré est transmis depuis le dispositif d'enregistrement (30) au terminal du côté recevant (10b) (S31).

2. Le procédé selon la revendication 1, comprenant en outre les étapes de :
transmettre, par le terminal du côté recevant (10b) au dispositif d'enregistrement (30), la requête d'acquisition d'un message pour acquérir le message enregistré; et
délivrer, par le dispositif d'enregistrement (30) au terminal du côté recevant (10b), le message sur lequel la conversion Codec a été effectuée.

3. Un système pour enregistrer un message depuis un terminal du côté appelant (10a) à un terminal du côté recevant (10b), le terminal du côté appelant (10a) étant opérable pour faire un appel au terminal du côté recevant (10b) par l'intermédiaire d'une ligne de communication d'un réseau à commutation de circuits (S1);
le système comprenant :
un centre de commutation mobile (20) opérable pour transmettre une requête de commutation de transmission de paquets pour commuter le réseau à commutation de circuits à un réseau à commutation de paquets (S8), lorsque le centre de commutation mobile (20) détecte que le terminal du côté recevant (10b) ne répond pas à l'appel pendant une certaine période de temps depuis que le terminal du côté appelant (10a) commence à faire un appel au terminal du côté recevant (10b) par l'intermédiaire de la ligne de communication du réseau à commutation de circuits (S4), et lorsque le centre de commutation mobile (20) discrimine que le terminal du côté recevant (10b) n'est pas capable de répondre à l'appel (S5), et discrimine si la ligne de communication avec le terminal du côté appelant (10a) peut être commutée au réseau à commutation de paquets en discriminant si le terminal du côté appelant (10a) est un terminal de communication capable de transmettre des paquets ou recevoir la requête de commutation de transmission de paquets (S6); et
un dispositif d'enregistrement (30) opérable pour enregistrer un message depuis le terminal du côté appelant (10a) au terminal du côté recevant (10b),
pour lequel :
le terminal du côté appelant (10a), qui a reçu la requête de commutation de transmission de paquets, est opérable pour transmettre une requête d'établissement de session pour établir une session au centre de commutation mobile (20) (S9),
le centre de commutation mobile (20) est opérable pour commuter la ligne de communication du réseau à commutation de circuits à la ligne de communication du réseau à commutation de paquets depuis le terminal du côté appelant (10a) au centre de commutation mobile (20) (S13, S14),
le terminal du côté appelant (10a) est opérable pour préparer le message pour le terminal du côté recevant (10b) dès la réception de la requête de commutation de transmission de paquets pour commuter la ligne de communication du réseau à commutation de circuits à la ligne de communication du réseau à commutation de paquets (S15),
le terminal du côté appelant (10a) est opérable pour transmettre le message pour le terminal du côté recevant (10b) au centre de commutation mobile (20) par l'intermédiaire de la ligne de communication du réseau à commutation de paquets, qui a été commutée par la commutation (S16),
le centre de commutation mobile (20) est opérable pour transmettre au dispositif d'enregistrement (30) le message pour le terminal du côté recevant (10b) par l'intermédiaire de la ligne de communication du réseau à commutation de paquets, qui a été commutée par la commutation (S18) ;
le centre de commutation mobile (20) est opérable pour enregistrer dans le dispositif d'enregistrement (30) le message, qui a été transmis par l'intermédiaire de la ligne de communication du réseau à commutation de paquets sans effectuer une conversion Codec pour un format d'enregistrement, dès la réception du message (S18);
le dispositif d'enregistrement (30) est opérable pour notifier au terminal du côté recevant (10b), que le message pour le terminal du côté recevant (10b) est enregistré (S24); et
le dispositif d'enregistrement (30) (S32) est opérable pour effectuer la conversion Codec, lorsqu'une requête d'acquisition d'un message enregistré pour acquérir le message enregistré, est reçue depuis le terminal du côté recevant (10b) (S26), et lorsque la conversion Codec est discriminée pour être nécessairement basée sur une capacité du terminal du côté recevant (10b) et un type de ligne de communication, sur laquelle le message enregistré est transmis depuis le dispositif d'enregistrement (30) au terminal du côté recevant (10b) (S31).
